Europäisches Patentamt

(19) European Patent Office

Office européen des brevets

(11) Numéro de publication : **0 002 975**
**B1**

(12) **FASCICULE DE BREVET EUROPÉEN**

(45) Date de publication du fascicule du brevet :
24.02.82

(21) Numéro de dépôt : **78400232.1**

(22) Date de dépôt : **12.12.78**

(51) Int. Cl.³ : **G 05 F   1/46**, H 02 P 13/20,
**H 02 M   3/28// H03F3/58**

(54) **Dispositif de régulation d'une tension continue.**

(30) Priorité : **03.01.78 FR 7800050**

(43) Date de publication de la demande :
**11.07.79 (Bulletin 79/14)**

(45) Mention de la délivrance du brevet :
**24.02.82 Bulletin 82/08**

(84) Etats contractants désignés :
**DE GB IT**

(56) Documents cités :
**DE - A - 1 764 943**
**FR - A - 1 454 422**
**FR - A - 1 562 917**
**FR - A - 2 274 162**
**US - A - 4 032 830**

(73) Titulaire : **THOMSON-CSF**
**173, Boulevard Haussmann**
**F-75360 Paris Cedex 08 (FR)**

(72) Inventeur : **Jacquet, Raymond**
**"THOMSON-CSF" -SCPI 173, bld Haussmann**
**F-75360 Paris Cedex 08 (FR)**

(74) Mandataire : **Courtellemont, Alain et al**
**"THOMSON-CSF" - SCPI 173, bld Haussmann**
**F-75360 Paris Cedex 08 (FR)**

Imprimerie Jouve, 18, rue St-Denis, 75001 Paris, France

## Dispositif de régulation d'une tension continue

La présente invention concerne les dispositifs de régulation d'une tension continue nécessitant un isolement entre la régulation et l'utilisation et en particulier les dispositifs de régulation de la tension d'alimentation du filament des tubes à ondes progressives.

Ces dispositifs étant reliés à la masse à travers l'alimentation « très haute tension » doivent supporter des parasites impulsionnels de forte amplitude (quelques milliers de volts) dus à cette dernière ; en outre, pour une bonne durée de vie des tubes à ondes progressives, il est nécessaire d'avoir une tension d'alimentation du filament (en abrégé « tension filament » dans ce qui suit) aussi stable que possible.

Il est connu pour réaliser ces dispositifs d'utiliser un transformateur permettant de séparer le circuit de régulation situé en amont de ce transformateur, du circuit de redressement et filtrage fournissant la « tension filament », placé en aval. Dans ce cas les composants à semi-conducteur du circuit de régulation sont protégés contre les parasites impulsionnels du fait de la faible bande passante du transformateur. Cependant l'impédance interne du circuit de redressement et filtrage n'est pas très faible, ce qui entraîne des fluctuations de la « tension filament » lorsque la résistance du filament varie ou lorsqu'un tube usagé est remplacé par un tube neuf ne présentant pas une valeur de résistance de filament parfaitement égale à celle du tube usagé.

Pour remédier à cet inconvénient, il est connu (publication FR-A-2 274 162) de prélever sur le secondaire du transformateur une partie de la « tension filament » ; la tension ainsi prélevée est réinjectée en amont du transformateur sur le circuit de régulation, de manière telle que les moindres variations de la « tension filament » soient compensées avec plus d'efficacité par le circuit de régulation. Cette technique correspond à effectuer une contre-réaction en tension.

Il est également connu (publications FR-A-1 562 917 et FR-A-1 454 422) d'utiliser un transformateur supplémentaire générant un signal de contre-réaction lié au courant de charge, mais ce transformateur ne sert qu'à assurer une protection contre les surtensions ou les surintensités, en particulier en cas de court-circuit. De plus, de tels dispositifs ne permettent pas un isolement de la partie régulatrice et de la partie utilisatrice et n'assurent pas une régulation de la tension de sortie du dispositif dans toute une zone de régulation. Ils ne peuvent donc pas être utilisés pour fournir la tension d'alimentation des tubes hyperfréquences.

La présente invention a pour but de remédier aux inconvénients précités et d'améliorer nettement la régulation obtenue à l'aide d'une contre-réaction classique en tension.

Un dispositif de régulation selon l'invention tel qu'il est décrit dans chacune des revendications 1 et 2 ci-jointes permet d'atteindre ce but.

Dans ce qui suit les expressions « continue-continue » ou « continue-alternative » appliquées à un circuit désignent la nature des tensions présentes respectivement à l'entrée et à la sortie de ce circuit.

L'invention sera mieux comprise et d'autres caractéristiques apparaîtront à l'aide de la description et des dessins s'y rapportant sur lesquels :

la figure 1 est un schéma d'un premier mode de réalisation du dispositif selon l'invention ;

la figure 2 est une variante d'un élément de la figure 1 ;

la figure 3 est un schéma d'un second mode de réalisation du dispositif selon l'invention.

Les éléments qui se correspondent d'une figure à l'autre sont désignés par le même repère.

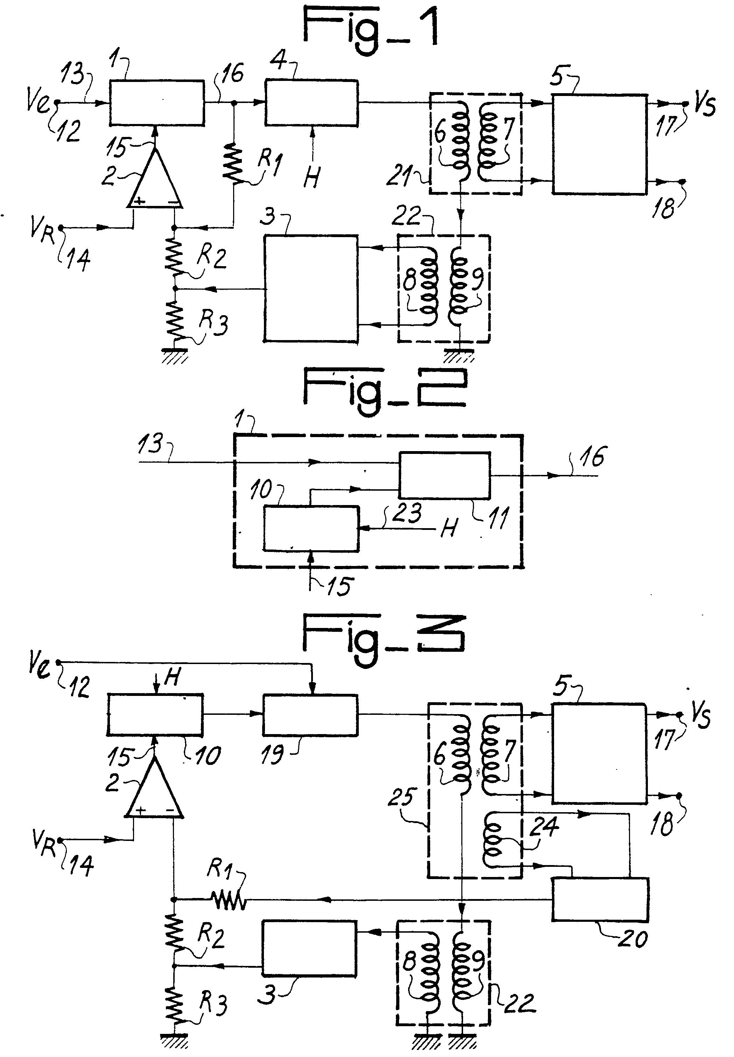

La figure 1 montre un régulateur de tension « continue-continue » 1, qui reçoit sur une première entrée 12, une tension continue à réguler $V_e$, et sur une seconde entrée 15, un signal de commande fourni par un amplificateur 2. Ce régulateur possède une borne de sortie 16 reliée d'une part à la masse à travers un diviseur résistif constitué de trois résistances disposées en série $R_1$, $R_2$, $R_3$, et d'autre part à une première entrée d'un convertisseur de tension « continue-alternative » 4. L'amplificateur 2 reçoit sur une entrée (+) une tension de référence $V_R$ et sur une entrée (−) une tension continue fournie par la borne commune aux résistances $R_1$ et $R_2$. Le convertisseur de tension « continue-alternative » 4 reçoit sur une seconde entrée un signal de commande H, constitué par un signal carré de fréquence fixe ; la sortie de ce convertisseur est reliée à la masse à travers deux enroulements 6 et 9, disposés en série. Ces enroulements sont les enroulements primaires d'un transformateur de tension 21 et d'un transformateur de courant 22. L'enroulement secondaire 7 du transformateur 21 alimente un circuit de redressement et filtrage 5, ayant deux bornes de sortie 17 et 18, fournissant la « tension filament » d'un tube à ondes progressives (non représenté). La borne 18 n'est pas reliée à la masse comme dans une alimentation classique, mais à la très haute tension du tube à ondes progressives. L'enroulement secondaire 8 du transformateur 22 alimente un circuit de redressement et filtrage 3 dont la sortie est reliée à la borne commune aux résistances $R_2$ et $R_3$.

Le fonctionnement de ce dispositif est le suivant. L'amplificateur 2 est un amplificateur de la tension d'erreur entre la tension de référence $V_R$ et la tension appliquée sur la borne (−). Le signal de sortie de cet amplificateur 2 commande le régulateur de tension « continue-continue » 1 qui fournit, sur sa sortie 16, une tension continue régulée. Le convertisseur de tension « continue-alternative » 4, couplé au transformateur 21 transforme la tension continue régulée en une tension alternative régulée, cette tension alternative est ensuite redressée et filtrée par le circuit de redressement et de filtrage 5.

Le fonctionnement de cette partie du dispositif est très classique et connu : une contre-réaction de tension est produite grâce à la tension de sortie du régulateur 1 qui est appliquée, à travers la résistance $R_1$, sur l'entrée (−) de l'amplificateur 2 ; en effet les variations autour de la valeur $V_R$ de la tension appliquée sur l'entrée (−) sont, après amplification, utilisées comme signal de commande du régulateur. Cependant l'impédance interne obtenue, entre les bornes 17 et 18, avec les seuls éléments 1, 2, 4, 5, 21 et $R_1$, n'est pas très faible, ce qui entraîne une mauvaise régulation en fonction des variations de la charge. Une amélioration est obtenue avec le circuit de redressement et filtrage 3, associé à la résistance $R_3$ et au transformateur d'intensité 22 pour produire une réaction en courant.

En effet, une variation de la résistance du filament du tube à ondes progressives (non représenté) entraîne, pour ce filament, une variation de sens inverse du courant continu qui le traverse et une variation de même sens que celle de la résistance du filament de la tension continue à ses bornes (car l'impédance interne entre les bornes 17 et 18 n'est pas nulle). Cette variation du courant continu entraîne à son tour une variation du courant alternatif dans l'enroulement secondaire du transformateur 21 qui la transmet (au rapport de transformation près) à l'enroulement primaire des transformateurs 21 et 22. L'enroulement secondaire 8 du transformateur d'intensité 22 transmet alors cette variation du courant alternatif à la résistance $R_3$, à travers le circuit de redressement et filtrage 3, sous la forme d'une variation de courant continu. Il en résulte une variation de tension aux bornes de la résistance $R_3$ et les éléments du dispositif selon la figure 1 sont choisis pour que cette variation soit en opposition de phase avec les variations de tension produites sur l'entrée (−) de l'amplificateur 1 par la tension de sortie du régulateur de tension « continue-continue » 1.

Il est ainsi constitué une boucle de réaction dont les éléments essentiels sont : le transformateur 22, le circuit de redressement et filtrage 3 et la résistance $R_3$. Cette boucle de réaction a la propriété d'améliorer la régulation ainsi que le montrent les calculs et que le confirme l'expérience.

A titre d'exemple, il a été relevé des valeurs expérimentales lors de la régulation d'une tension d'alimentation d'un filament, d'une part avec un dispositif de régulation comportant une boucle de réaction, et d'autre part avec un dispositif de régulation ne comportant pas de boucle de réaction. La tension d'alimentation du filament devant être régulée à 5,5 V, les deux dispositifs ont tout d'abord été réglés pour générer une tension de 5,5 V aux bornes du filament, ce qui correspondait à un courant $I_f = 0,4$ A passant dans le filament. La résistance du filament a ensuite été modifiée jusqu'à obtenir un courant $I_f$ de 0,8 A. La valeur de la tension d'alimentation relevée aux bornes du filament a alors été de 5,2 V avec le dispositif de régulation ne comportant pas la boucle de réaction, et de 5,49 V avec le dispositif comportant la boucle de réaction selon l'invention. Ces résultats montrent que l'utilisation du dispositif de régulation selon l'invention apporte une nette amélioration de la régulation.

Il est à noter que le régulateur de tension « continue-continue » 1, est du type classique (c'est-à-dire du type à transistor bipolaire ou à association de tels transistors) dans cet exemple. Un autre type de régulateur utilisable dans le dispositif selon la figure 1 est donné par la figure 2.

La figure 2 montre un modulateur de largeur d'impulsions 10, qui possède une première entrée 15, une seconde entrée 23 recevant le signal d'horloge H, et une sortie reliée à une première entrée d'un convertisseur de tension « continue-continue » à découpage 11. Ce convertisseur est de type connu (type « Flyback ») et possède une seconde entrée 13 et une sortie 16.

Le fonctionnement de ce régulateur « continue-continue » est également classique et connu. Dans ce cas le signal de sortie de l'amplificateur 2 (figure 1) commande la largeur des impulsions fournies par le modulateur 10. Ces impulsions commandent, à leur tour, le découpage de la tension d'entrée à réguler $V_e$ (figure 1). Cette tension découpée est ensuite redressée et filtrée et est disponible sur la borne de sortie 16 de ce régulateur de tension « continue-continue » à découpage.

D'autres applications de cette boucle de réaction sont possibles et parmi celles-ci, l'une d'elles est explicitée sur la figure 3.

L'amplificateur 2, le modulateur de largeur d'impulsions 10, les résistances $R_2$ et $R_3$, les circuits de redressement et filtrage 3 et 5, le transformateur 22 et les enroulements 6 et 7 de la figure 3 sont identiques à ceux des figures 1 et 2 et sont connectés entre eux de la même façon. Les enroulements 6 et 7 sont respectivement ceux du primaire et d'un premier secondaire d'un transformateur 25. En outre, un second enroulement 24, du secondaire de ce dernier transformateur est connecté à un circuit de redressement et filtrage 20, dont la sortie est reliée au (−) de l'amplificateur 2, à travers une résistance $R_1$. La sortie du modulateur de largeur d'impulsions 10 est reliée à une première entrée d'un convertisseur de tension « continue-alternative » 19 ayant une deuxième entrée sur laquelle est appliquée la tension à réguler $V_e$. La sortie de ce convertisseur est reliée à l'enroulement 6.

Le fonctionnement de ce montage est identique à celui de la figure 1 aux différences près suivantes.

La tension alternative est obtenue sans tension continue régulée intermédiaire ; mais, comme dans les montages précédents, la résistance $R_1$ doit être reliée à une tension continue régulée ; ceci impose le second enroulement 24 et le circuit de redressement et filtrage 20.

En outre, le modulateur de largeur d'impulsions 10 commande directement le convertisseur de tension « continue-alternative » 19.

L'invention n'est pas limitée à la seule régulation de la tension d'alimentation du filament des tubes à ondes progressives, elle s'applique aussi à la régulation de la tension d'alimentation du filament des tubes hyperfréquences en général et également aux dispositifs nécessitant une alimentation continue présentant un isolement entre les circuits de régulation et d'utilisation.

**Revendications**

1. Dispositif de régulation d'une tension continue permettant un isolement entre la régulation et l'utilisation et comprenant : un régulateur de tension « continue-continue » (1) ayant une entrée recevant une tension continue, et une entrée de commande ; un convertisseur de tension « continue-alternative » (4) ayant une entrée couplée à la sortie du régulateur (1) ; un amplificateur d'erreur (2) ayant une première entrée recevant un signal de référence, une deuxième entrée couplée à la sortie du régulateur (1) à travers une première résistance $R_1$, et une sortie couplée à l'entrée de commande du régulateur (1) ; un transformateur de tension (21) dont une borne de l'enroulement primaire (6) est couplée à la sortie du régulateur (1) et l'autre à la masse ; un premier circuit de redressement et filtrage (5) couplé à l'enroulement secondaire (7) du transformateur de tension (21) et fournissant la tension de sortie du dispositif, caractérisé en ce qu'il comporte : un transformateur de courant (22) dont l'enroulement primaire est disposé en série entre l'enroulement primaire du transformateur de tension et la masse ; et un deuxième circuit de redressement et filtrage (3) ayant des première et deuxième entrées respectivement couplées aux première et deuxième extrémités de l'enroulement secondaire (8) du transformateur de courant (22) et une sortie couplée à la seconde entrée de l'amplificateur d'erreur (2) à travers une deuxième résistance $R_2$ et à la masse à travers une troisième résistance $R_3$, et en ce que le secondaire du transformateur de tension est isolé de la masse.

2. Dispositif de régulation d'une tension continue permettant un isolement entre la régulation et l'utilisation et comprenant : un modulateur de largeur d'impulsions (10) ayant une entrée recevant un signal d'horloge et une entrée de commande ; un convertisseur de tension « continue-alternative » (19) ayant une entrée recevant une tension continue et une entrée de commande couplée à la sortie du modulateur (10) ; un amplificateur d'erreur (2) ayant une première entrée recevant un signal de référence et une sortie couplée à l'entrée de commande du modulateur (10) ; un transformateur de tension (25) dont une borne de l'enroulement primaire (6) est couplée à la sortie du convertisseur (19) et l'autre à la masse ; un premier circuit de redressement et filtrage (5) couplé à l'enroulement secondaire (7) du transformateur de tension (25) et fournissant la tension de sortie du dispositif ; un deuxième circuit de redressement et filtrage (20) ayant des première et deuxième entrées respectivement couplées aux première et deuxième extrémités d'un enroulement secondaire supplémentaire (24) du transformateur de tension (25) et une sortie couplée à la deuxième entrée de l'amplificateur d'erreur (2) à travers une première résistance $R_1$, caractérisé en ce qu'il comporte : un transformateur de courant (22) dont l'enroulement primaire est disposé en série entre l'enroulement primaire du transformateur de tension et la masse ; et un troisième circuit de redressement et filtrage (3) ayant des première et deuxième entrées respectivement couplées aux première et deuxième extrémités de l'enroulement secondaire (8) du transformateur de courant (22), et une sortie couplée à la seconde entrée de l'amplificateur d'erreur (2) à travers une deuxième résistance $R_2$ et à la masse à travers une troisième résistance $R_3$, et en ce que le secondaire du transformateur de tension est isolé de la masse.

**Claims**

1. Direct voltage regulation device permitting an insulation between the regulation and the use, and comprising : a « direct-direct » voltage regulator (1) having an input receiving a direct voltage and a control input ; a « direct-alternating » voltage converter (4) having an input coupled to the output of the regulator (1) ; an error amplifier (2) having a first input receiving a reference signal, a second input coupled to the output of the regulator (1) through a first resistor $R_1$ and an output coupled to the control input of the regulator (1) ; a voltage transformer (21) one terminal of the primary winding (6) of which is coupled to the output of the regulator (1) and the other to the ground ; a first rectifier and filtering circuit (5) coupled to the secondary winding (7) of the voltage transformer (21) and providing the output voltage of the device, characterised in that it comprises : a current transformer (22) the primary winding of which is connected in series between the primary winding of the voltage transformer and ground ; and a second rectifier and filtering circuit (3) having first and second inputs coupled to the first and second ends of the secondary winding (8) of the current transformer (22), respectively, and an output coupled to the second input of the error amplifier (2) through a first resistor $R_1$, characterized in that it comprises : a current transformer (22) the primary winding of which is connected in series between the primary winding of the voltage transformer and ground ; and a third rectifier and filtering circuit (3) having first and second inputs coupled to the first and second ends of the secondary winding (8) of the current transformer (22), respectively, and an output coupled to the second input of the error amplifier (2) through a second

resistor $R_2$ and to ground through a third resistor $R_3$, and in that the secondary of the voltage transformer is insulated from ground.

2. Direct voltage regulation device permitting an insulation between the regulation and the use, and comprising : a pulse width modulator (10) having an input receiving a clock signal and a control input ; a « direct-alternating » voltage converter (19) having an input receiving a direct voltage and a control input coupled to the output of the modulator (10) ; an error amplifier (2) having a first input receiving a reference signal and an input coupled to the control input of the modulator (10) ; a voltage transformer (25) one terminal of the primary winding (6) of which is coupled to the output of the converter (19) and the other to ground ; a first rectifier and filtering circuit (5) coupled to the secondary winding (7) of the voltage transformer (25) and providing the output voltage of the device ; a second rectifier and filtering circuit (20) having first and second inputs coupled to the first and second ends of an additional secondary winding (24) of the voltage transformer (25), respectively, and an output coupled to the second input of the error amplifier (2) through a first resistor $R_1$, characterized in that it comprises : a current transformer (22) the primary winding of which is series-connected between the primary winding of the voltage transformer and ground ; and a third rectifier and filtering circuit (3) having first and second inputs coupled to the first and second terminals of the secondary winding (8) of the current transformer (22), respectively, and an output coupled to the second input of the error amplifier (2) through a second resistor $R_2$ and to ground through a third resistor $R_3$, and in that the secondary of the voltage transformer is insulated from ground.

## Ansprüche

1. Vorrichtung zur Regelung einer Gleichspannung, die eine Isolierung zwischen der Regelung und der Verwendung gestattet, enthaltend ; einen « Gleichspannungs/Gleichspannungs-Regler » (1) mit einem Eingang, der eine Gleichspannung empfängt, und einem Steuereingang ; einen « Gleichspannungs/Wechselspannungs-Spannungswandler » (4) mit einem an den Ausgang des Reglers (1) angekoppelten Eingang ; einen Fehlerverstärker (2), dessen erster Eingang ein Bezugssignal empfängt, und einem zweiten Eingang, der an den Ausgang des Reglers über einen ersten Widerstand $R_1$ angekoppelt ist, und mit einem an den Steuereingang des Reglers (1) angekoppelten Ausgang ; einen Spannungstransformator (21), bei dem ein Anschluß der Primärwicklung (6) an den Ausgang des Reglers (1) und der andere an Masse angeschlossen ist ; eine erste Gleichrichter- und Siebschaltung (5), die an die Sekundärwicklung (7) des Spannungstransformators (21) angeschlossen ist und die Ausgangsspannung der Vorrichtung liefert, dadurch gekennzeichnet, daß sie umfaßt : einen Stromtransformator (22), dessen Primärwicklung in Reihe zwischen die Primärwicklung des Spannungstransformators und Masse geschaltet ist ; eine zweite Gleichrichter- und Siebschaltung (3), die einen ersten und einen zweiten Eingang aufweist, welche an das erste bzw. zweite Ende der Sekundärwicklung (8) des Stromtransformators (22) angekoppelt sind, und deren Ausgang über einen zweiten Widerstand $R_2$ an den zweiten Eingang des Fehlerverstärkers (2) und über einen dritten Widerstand $R_3$ an Masse angeschlossen ist, und daß die Sekundärseite des Spannungstransformators von Masse isoliert ist.

2. Vorrichtung zur Gleichspannungsregelung, die eine Isolierung zwischen der Regelung und der Verwendung gestattet, enthaltend ; einen Pulsbreitenmodulator (10), der einen ein Taktsignal empfangenden Eingang und einen Steuereingang aufweist ; einen « Gleichspannungs/Wechselspannungs-Wandler » (19) mit einem eine Gleichspannung empfangenden Eingang und einem Steuereingang, der an den Ausgang des Modulators (10) angekoppelt ist ; einen Fehlerverstärker (2), dessen erster Eingang ein Bezugssignal empfängt und dessen Ausgang an den Steuereingang des Modulators (10) angeschlossen ist ; einen Spannungstransformator (25), bei dem ein Anschluß der Primärwicklung (6) an den Ausgang des Wandlers (19) und der andere an Masse angelegt ist ; einer ersten Gleichrichter- und Siebschaltung (5), die an die Sekundärwicklung (7) des Spannungstransformators (25) angekoppelt ist und die Ausgangsspannung der Vorrichtung liefert ; eine zweite Gleichrichter- und Siebschaltung (20), deren erster und zweiter Eingang an das erste bzw. zweite Ende einer zusätzlichen Sekundärwicklung (24) des Spannungstransformators (25) angekoppelt ist und deren Ausgang an den zweiten Eingang des Fehlerverstärkers (2) über einen ersten Widerstand $R_1$ angekoppelt ist, dadurch gekennzeichnet, daß sie umfaßt : einen Stromtransformator (22), dessen Primärwicklung in Reihe zwischen die Primärwicklung des Spannungstransformators und Masse geschaltet ist ; und eine dritte Gleichrichter- und Siebschaltung (3), deren erster und zweiter Eingang an das erste bzw. zweite Ende der Sekundärwicklung (8) des Stromtransformators (22) angekoppelt ist und deren Ausgang über einen zweiten Widerstand $R_2$ an den zweiten Eingang des Fehlerverstärkers (2) und über einen dritten Widerstand $R_3$ an Masse angelegt ist, und daß die Sekundärseite des Spannungstransformators von Masse isoliert ist.

0 002 975

Fig_1

Fig_2

Fig_3

1